(19) Europäisches Patentamt / European Patent Office / Office européen des brevets

(11) **EP 2 513 668 B1**

(12) **FASCICULE DE BREVET EUROPEEN**

(45) Date de publication et mention
de la délivrance du brevet:
**24.01.2018   Bulletin 2018/04**

(51) Int Cl.:
***G01S 17/89*** *(2006.01)*        ***G06F 17/30*** *(2006.01)*
***G06T 7/00*** *(2017.01)*

(21) Numéro de dépôt: **10790568.9**

(22) Date de dépôt: **15.12.2010**

(86) Numéro de dépôt international:
**PCT/EP2010/069697**

(87) Numéro de publication internationale:
**WO 2011/073227 (23.06.2011 Gazette 2011/25)**

(54) **PROCEDE DE GEO-REFERENCEMENT D'UNE ZONE IMAGEE**

VERFAHREN ZUR GEOREFERENZIERUNG EINES ABGEBILDETEN BEREICHS

METHOD FOR GEO-REFERENCING AN IMAGED AREA

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **16.12.2009   FR 0906095**

(43) Date de publication de la demande:
**24.10.2012   Bulletin 2012/43**

(73) Titulaire: **Thales
92400 Courbevoie (FR)**

(72) Inventeur: **SIMON, Alain
F-78490 Les Mesnuls (FR)**

(74) Mandataire: **Henriot, Marie-Pierre et al
Marks & Clerk France
Conseils en Propriété Industrielle
Immeuble Visium
22, Avenue Aristide Briand
94117 Arcueil Cedex (FR)**

(56) Documents cités:
**US-A1- 2002 060 784     US-A1- 2006 215 935
US-A1- 2007 103 671     US-A1- 2009 034 795**

**Description**

Le domaine de l'invention est celui du géo-référencement d'une zone au moyen d'un système optronique, avec une classe de performance décamétrique, et plus particulièrement dans des conditions de prise de vue obliques fortes.

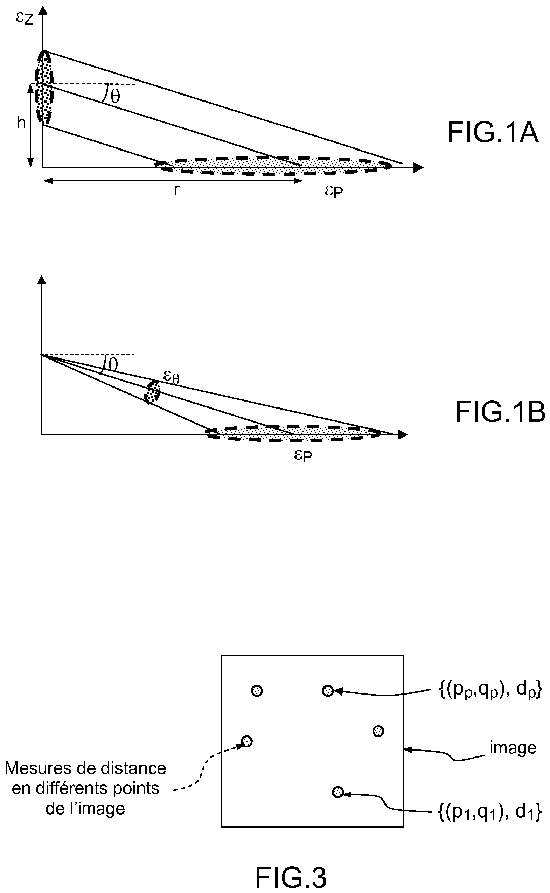

Les figures 1 illustrent les erreurs de positionnement (ou géo-localisation) d'un point P d'une zone, induites par des incertitudes de mesure dans des conditions de prise de vue obliques fortes rencontrées par exemple dans des applications aéro-terrestres où le système optronique est situé près du sol en regard de la distance à l'objet (en aéroporté, le rapport de la distance à l'objet à hauteur de vol est de l'ordre de 5 - et voir davantage - pour des vols basse altitude ou des applications terrestres).

La figure 1A illustre une erreur planimétrique $\varepsilon_P$ induite par une incertitude $\varepsilon_h$ de mesure de la position verticale h du système optronique. On a:

$$\varepsilon_P = \varepsilon_h \, / \tan \theta = (r/h) \, \varepsilon_h \approx \varepsilon_h \, /\theta$$

Une erreur $\varepsilon_h$ de 20 m par exemple, pour une altitude supérieure à celle de l'objet de 20 kft, induit pour le positionnement d'un point P situé à 30 km, une erreur $\varepsilon_P$ de 120 m.

La figure 1B illustre une erreur $\varepsilon_P$ induite par une incertitude $\varepsilon_\theta$ de mesure du site sous lequel est vu le point P à partir du système optronique, c'est-à-dire pour une erreur d'orientation dans le plan vertical de la Ligne de Visée (ou LdV).
On a:

$$\varepsilon_P = r \, . \, \varepsilon_\theta \, / \sin \theta = r \, . \, \varepsilon_\theta \, .(h^2 + r^2 \,)^{1/2} \, / \, h = r^2. \, \varepsilon_\theta \, (1+ (h/r)^2)^{1/2} \approx r^2 \, . \, \varepsilon_\theta \, /h$$

Dans les mêmes conditions que dans l'exemple précédent, une erreur $\varepsilon_\theta$ de 1 mrd par exemple, qui correspond à un cas très favorable, induit une erreur $\varepsilon_\theta$ sur le positionnement du point P de 150 m.

Ces erreurs peuvent se cumuler pour finalement introduire une erreur d'environ 270 m pour le positionnement du point P.

De telles erreurs se retrouvent également avec des systèmes optroniques terrestres à faible altitude (hélicoptères, mini-drones) fixés par exemple en haut d'un mât d'un véhicule ou d'un navire. Parmi ces systèmes la plupart doivent néanmoins acquérir et caractériser le positionnement d'objets évoluant à grande distance avec une performance décamétrique.

On vient d'illustrer l'influence d'erreurs de mesure sur l'erreur de géo-localisation d'un point P. Le géo-référencement consiste à géo-localiser tous les points d'une zone imagée et non un point unique.

Pour disposer d'un géo-référencement de classe décamétrique dans les conditions précitées, il est d'usage de recourir à des post-traitements au sol généralement réalisés par un opérateur spécialisé qui recale les images acquises au moyen de références géographiques (ou amer en ayant de préférence une couverture mondiale ou du moins suffisante pour les besoins exprimés). Mais ces amers, généralement issus de prises de vues proches de la verticale, sont difficiles à apparier avec l'image fortement oblique de manière automatique, et sujets au vieillissement de l'information.

Une des difficultés est de disposer de cette performance de manière rapide et en tout point du globe sans devoir recourir à une information de vérité de couverture mondiale, difficile à apparier avec l'image de manière automatique, non sujette au vieillissement de l'information.

Une solution, mise en oeuvre dans un domaine voisin, pour établir des modèles numériques d'élévation ou MNE, consiste à réaliser en vol avec un laser plusieurs mesures de distance et de direction du faisceau dans des conditions d'acquisitions favorables. En effet, cette application est réalisée avec de faibles contraintes de prise de vue ce qui permet d'acquérir les informations dans des conditions proches de la verticale et avec une hauteur de vol assez faible de façon à ce que les erreurs d'orientation ne soient pas trop pénalisantes pour la performance de localisation directe. Les systèmes utilisés ne proposent généralement pas d'imagerie associée et lorsqu'ils en disposent les deux systèmes ne sont pas couplés. Ces techniques de relevé laser aéroporté visent uniquement l'exploitation de mesures de distance en vue de la reconstruction de MNE et le couplage à une image n'est pas assuré dans les applications rencontrées qui toutes relèvent de conditions d'acquisition éloignées de visées obliques fortes. Par ailleurs ces approches se prêtent favorablement à la retouche des informations produites et à leur contrôle comme pour les chantiers de stéréo-restitution consistant à produire, dans des stations au sol et sous le contrôle d'un opérateur, des Modèles Numériques de Terrain (MNT) et des ortho-images sur les zones imagées.

On peut citer comme exemple de procédé de géo rectification d'images au moyen d'un lidar le document US

EP 2 513 668 B1

2002/060784. Le document US 2006/215935 décrit un procédé de superposition d'une image unique sur une ortho-image disponible.

Une autre solution couramment utilisée pour réaliser des ortho-images, des MNT, pour au final produire des cartes géographiques et des Base De Données (BDD) vectorielles, utilise des techniques d'aéro-triangulation basées sur des acquisitions d'images optiques ou radars, à partir d'aéronefs ou de satellites.

On peut citer comme exemple de procédé de calcul de distance de manière passive relativement à un capteur en déplacement le document US 2009/034795.

Les capteurs sur satellites sont couramment utilisés pour couvrir de grandes zones à partir d'acquisition d'images et de mesures de position et d'attitude ; et ceci à l'échelle d'un territoire et davantage. La maîtrise de la cohérence interne des images optiques, basée sur le respect des formes des objets de la scène après rectification, est réalisée au moyen d'un détecteur matriciel. Elle est assurée en utilisant la trajectoire et/ou des techniques de balayage, tout en assurant un recouvrement et une reconstruction contiguë de l'information qui peut ensuite être orientée dans l'ensemble à partir de quelques points d'amers afin de corriger les biais résiduels d'orientation. On désigne aussi ces techniques de spatio-triangulation lorsque les acquisitions sont réalisées à partir de satellites d'observation ou de télédétection.

Les applications d'aéro-triangulation correspondent à des acquisitions avec de larges bases de mesure (une base étant le déplacement du détecteur entre deux images) et donc à une cadence d'acquisition relativement faible (de l'ordre de 0.1 Hz) en comparaison avec des applications stratégiques (quelques 10Hz) susceptibles d'acquérir environ 10000 images en 3 minutes.

Le traitement et l'exploitation des images dans une station au sol se fait, là encore, sous le contrôle d'un opérateur. Dans son travail de production de renseignements, il dispose par ailleurs de :

- l'accès à des données externes de référence ayant un géo-référencement déjà qualifié
- la faculté à repérer les objets et les détails pertinents de l'image et de les associer aux données de référence pour disposer de points d'amer dans l'image afin d'en améliorer le géo-référencement.

L'amélioration du géo-référencement des images par un opérateur au sol constitue un processus efficace sur le plan de la confiance quant au résultat mais c'est à la fois contraignant vis-à-vis du délai de mise en oeuvre, du besoin en données géographiques de référence, des efforts et du délai de mise en correspondance - d'autant plus important que l'information associée à l'image à géo-référencer est de moindre qualité.

Les travaux d'aéro-triangulation déterminent l'orientation absolue de l'ensemble des images. Ceci permet au besoin de les assembler selon une image unique (ou bloc d'images) et de corriger le résultat au moyen de saisie de points homologues ou/et d'amer ainsi que de réaliser un contrôle manuel ou visuel de la performance. La nécessité d'un opérateur dans la boucle pour contrôler la qualité d'assemblage des images et du géo-référencement d'une zone couverte par plusieurs images n'est pas envisageable dans les conditions d'utilisations d'applications nécessitant notamment un délai de mise en oeuvre beaucoup plus réduit, proche du temps réel.

A ce problème de performance lié aux Conditions de Prise De Vue (ou CDPV) s'ajoute la nécessité d'avoir :

- une meilleure résolution des images pour la visualisation de détails, c'est-à-dire une amélioration de la résolution avec laquelle le sol est représenté dans l'image ou « GRD », acronyme de l'expression anglo-saxonne « Ground Resolution Distance » et
- une plus grande couverture au sol, c'est-à-dire une augmentation des zones imagées de manière à servir des opérations de nature environnementale, de sécurisation, stratégique ou tactique, sans pour autant pénaliser la portée d'acquisition des informations à géoréférencer.

La couverture de grandes zones est assurée en déplaçant le détecteur ou/et en utilisant des détecteurs plus grands ou/et des champs plus importants.

La couverture d'une grande zone par un moyen satellite est facilitée par son déplacement sur son orbite et une bonne qualité relative entre les paramètres de prise de vue car :

- la qualité du positionnement repose sur des mesures et un contrôle permanent de la trajectographie contrainte par les équations de la mécanique céleste. Celles-ci permettant une modélisation simple et rigide de sa forme au cours du temps,
- la cohérence d'attitude de par la stabilité de la trajectoire et des moyens de contrôle associés.

Pour les applications terrestres, le déplacement du détecteur n'est pas toujours possible et sa taille est parfois limitée en regard des zones à acquérir. La couverture de grandes zones par un moyen aéroterrestre est plus délicate puisque :

3

- en aéro-porté, la trajectoire est assurée par une plate-forme manoeuvrante,
- en terrestre, la plate-forme est fixe ou peu mobile.

L'utilisation de grands détecteurs, avec des matériaux de qualité bien maîtrisée, a d'abord favorisé l'emploi de détecteurs à barrettes. Cependant, la difficulté liée à la connaissance fine du pointage au cours du temps (entre les directions de l'image correspondant à la direction de la barrette) dégrade la cohérence interne de l'image (qui permet la maîtrise de sa géométrie) et donc l'une des caractéristiques forte de l'optronique. Par ailleurs le temps d'intégration doit être réduit pour s'adapter aux défilements liés aux déplacements des détecteurs par rapport à la zone imagée.

La possibilité d'utiliser des champs plus importants pour couvrir de grandes zones contrarie le besoin en GRD pour un domaine de distance d'acquisition donné. Pour remédier à cette contrainte, des modes d'acquisition rapide par balayage tel que frame-step (ou step staring) sont utilisées et le nombre de détecteurs sur une même plate-forme est augmenté.

Pour les applications militaires, de grandes quantités d'images bien résolues doivent pouvoir être géo-référencées rapidement.

Le but de l'invention est de pallier ces inconvénients de délais de mise en oeuvre, de recours à un opérateur au sol, et à des données externes de référence, de résolution insuffisante de la scène dans l'image, tout en respectant les contraintes de géo-référencement de classe décamétrique, et en adaptant au besoin la surface au sol imagée dans des conditions de prise de vue obliques fortes et de portée d'acquisition importante.

Le procédé de géo-référencement selon l'invention est basé sur l'apport de deux types d'informations ayant une forte exactitude et précision :

- plusieurs mesures de distances dans une même information image, dont l'exactitude est métrique,
- les écarts angulaires d'orientation entre les pixels des directions télémétrées dont la précision est de l'ordre de la taille angulaire du pixel (10 µrad), repose sur :

  ◦ la qualité avec laquelle peuvent être déterminées les coordonnées images associées aux mesures de distance,
  ◦ la bonne cohérence géométrique interne de l'image optronique et la capacité d'appariement entre images présentant un recouvrement toutes deux inférieures ou de l'ordre du pixel.

Un traitement algorithmique calcule les paramètres de conditions des prises de vue de chaque image à partir des informations précédentes. Ainsi, quelques mesures distances exactes et des écarts angulaires précis (utilisant l'information de cohérence interne des images optroniques et/ou la précision des mesures inertielles) permettent de mieux géoréférencer la zone dans l'hypothèse d'un sol peu accidenté ou en disposant d'un MNT. La qualité du géoréférencement de la zone imagée hérite alors globalement de l'exactitude des mesures de distance et localement de la cohérence géométrique apportée par la qualité relative des mesures angulaires optroniques.

D'après le bilan des erreurs réalisé, on note la cohérence sur la qualité respective des informations utilisées qui est de l'ordre du mètre pour chaque contribution (quelques pixels de taille 10 µrad à 30 km pour 20kft d'altitude représente une distance de 1.5 m).

Plus précisément l'invention a pour objet un procédé de géo-référencement d'une zone au moyen d'un système optronique d'imagerie selon la revendication 1.

Ce procédé permet de géo-localiser toute une zone imagée, non limitée à un point unique de la scène :

- avec une exactitude de classe décamétrique, notamment dans des conditions de prises de vue obliques fortes souvent rencontrées dans les applications aéroportées et dans les situations où le détecteur est situé près du sol, puisque la performance est peu sensible aux erreurs de mesure d'attitude (forte atténuation de la sensibilité de l'erreur de positionnement planimétrique liée à l'erreur d'orientation en site ainsi que celle liée à l'erreur de rotation autour de la LdV)
- de manière autonome, c'est-à-dire sans intervention d'un opérateur et sans accéder à des données de référence,
- en temps réel puisque l'accès à l'information se fait typiquement à la cadence du télémètre (typiquement 10 Hz) et sans avoir à mettre en oeuvre un post-traitement ou des moyens spécifiques à l'amélioration de l'information,
- avec une couverture de la scène la plus étendue et la mieux résolue malgré une concurrence entre la portée d'acquisition et la résolution du sol dans l'image (Ground Resolution Distance GRD),
- de manière discrète car on peut géo-localiser un objet qui n'a pas été directement éclairé par le télémètre, ce qui évite de réaliser une mesure active sur un objet sensible à localiser, et ainsi représente un avantage pour des opérations tactiques nécessitant un niveau de discrétion.

Selon un cas particulier de réalisation, les points télémétrés sont respectivement au centre de chacune des images.

De préférence, lorsque le système optronique est fixe, les paramètres décrivant le positionnement $(x_e, y_e, z_e)$ ne sont estimés qu'une fois.

Lorsque le système optronique comporte des moyens de positionnement et qu'il évolue selon une trajectoire connue, les positionnements $x_e$, $y_e$, $z_e$ peuvent être estimés à partir des mesures successives de position et d'un modèle de la trajectoire.

Lorsque le système optronique accède à (ou comporte) des moyens de mesures indiquant son positionnement, sa vitesse, son accélération ; alors sa trajectoire est modélisée sous forme paramétrique. Les positionnements $x_e$, $y_e$, $z_e$ sont alors estimés pour les positions aux dates correspondant à celle des acquisitions (images et télémétries).

L'invention a aussi pour objet un système optronique de géo-référencement selon la revendication 6.

D'autres caractéristiques et avantages de l'invention apparaîtront à la lecture de la description détaillée qui suit, faite à titre d'exemple non limitatif et en référence aux dessins annexés dans lesquels :

les figures 1A et 1B illustrent schématiquement les erreurs de géo-localisation dans des conditions de prise de vue obliques,

la figure 2 représente schématiquement pour une image les paramètres des conditions de prise de vue et autres informations utilisées dans le procédé de géo-référencement selon l'invention,

la figure 3 représente schématiquement un exemple d'image utilisée dans le cadre d'un premier mode de réalisation de l'invention basé sur une seule image, avec plusieurs points télémétrés,

la figure 4 illustre schématiquement le mode de fonctionnement d'un télémètre équipé de moyens de déflexion,

la figure 5 illustre schématiquement un exemple d'un deuxième mode de réalisation du procédé selon l'invention basé sur M images, avec M=2, et plusieurs points télémétrés dans chaque image,

les figures 6A et 6B illustrent schématiquement un autre exemple de ce deuxième mode de réalisation du procédé selon l'invention basé sur M images, avec M=4, et un ou plusieurs points télémétrés dans chaque image, avec l'étape d'acquisition des images et des points télémétrés (fig 6A), et l'étape d'extraction de points homologues dans les images (fig 6B),

les figures 7A et 7B illustrent schématiquement un exemple d'un troisième mode de réalisation du procédé selon l'invention basé sur M images, avec M=4, et un seul point télémétré au centre de 3 de ces images, avec l'étape d'acquisition des images et des points télémétrés (fig 7A), et l'étape d'extraction de points homologues dans les images (fig 7B),

la figure 8 représente schématiquement un exemple de système optronique selon l'invention.

les figures 9 illustrent un processus et un résultat de densification de l'altitude sous forme triangulaire en partant d'une grille de MNT.

la figure 10 illustre l'influence d'un résultat de densification du modèle de scène sur un calcul d'inter-visibilité.

D'une figure à l'autre, les mêmes éléments sont repérés par les mêmes références.

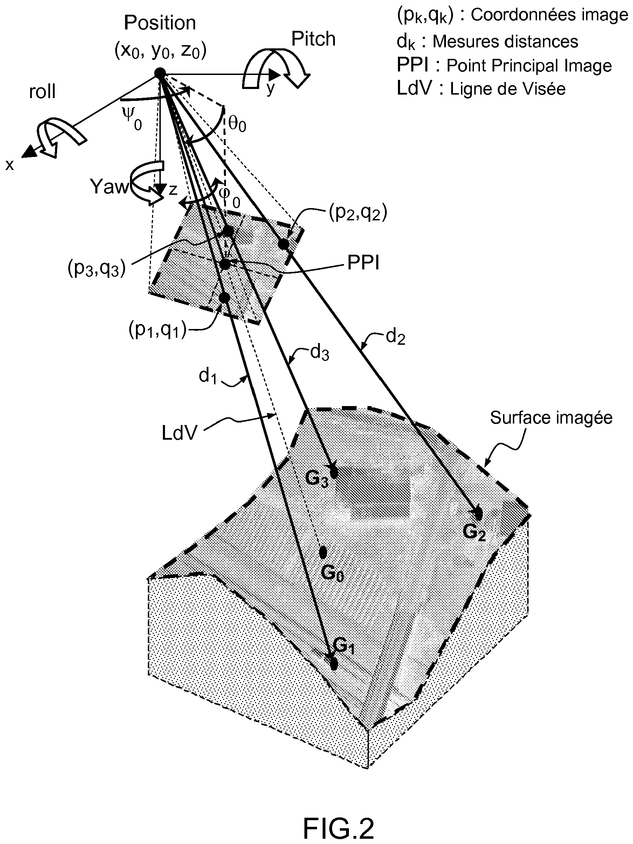

L'erreur de géo-référencement d'une zone est conditionnée par la qualité de six paramètres externes, aussi désignés paramètres de prise de vue, indiqués figure 2 et qui représentent :

- la position absolue du détecteur, obtenue par des moyens de positionnement et qui dans un repère géographique local est caractérisée par :

    ∘ ses coordonnées planimétriques x et y et,
    ∘ sa coordonnée altimétrique z,.

- l'attitude absolue de l'image obtenue par des moyens inertiels tels que la Centrale Inertielle de Navigation (CNI) ou/et Unité de Mesure Inertielle (UMI ou INS en anglais) et permettant de caractériser :

    ∘ la direction de la LdV définie par son azimut $\psi$ et son site $\theta$ qualifiant aussi sa dépression,
    ∘ une 3ieme rotation $\varphi$ de l'image autour de la LdV aussi appelée déversement,

La position du détecteur (ou du capteur) est de préférence utilisée dans un repère géographique cartésien :

- soit un système global géocentrique (ou ECEF pour Earth Centered Earth Fixed),
- soit un système local topocentrique (ou ENU pour East North Up) ou de manière équivalente, puisqu'il permute simplement les axes x et y et inverse l'axe z, un Repère Géographique Local (RGL) encore désigné par NED (pour North East Down).

La mesure de cette position est acquise au niveau de la plate-forme ou du capteur si son montage à la plate-forme le permet (exemple des caméras terrestres). Pour disposer d'une information de position de bonne exactitude, on préfère utiliser une information élaborée à partir d'un système de positionnement global par satellite (GNSS) et idéalement hybridée aux informations inertielles disponibles (comme par exemple la CNI de la plate-forme, l'UMI du capteur). Les systèmes GNSS envisagés s'appuient en particulier aujourd'hui sur le GPS et son complément EGNOS, Galiléo dès lors que celui sera disponible et

GLONASS lorsque sa rénovation sera achevée.

Les 6 paramètres de prise de vue ($x_m$, $y_m$, $z_m$, $\varphi_m$, $\theta_m$, $\psi_m$) sont déterminés avec une qualité héritée de celle des instruments de mesure et des unités de traitement associées.

Le calibrage des paramètres internes au système optronique (focale et distorsion optique du dispositif d'imagerie, point principal image,...) est supposé réalisé par ailleurs. Cependant le procédé permet aussi d'estimer ces paramètres et plus précisément de déterminer par exemple les valeurs particulières que prennent les paramètres d'un modèle de distorsion optique dans les conditions de fonctionnement du capteur (température et contraintes mécaniques).

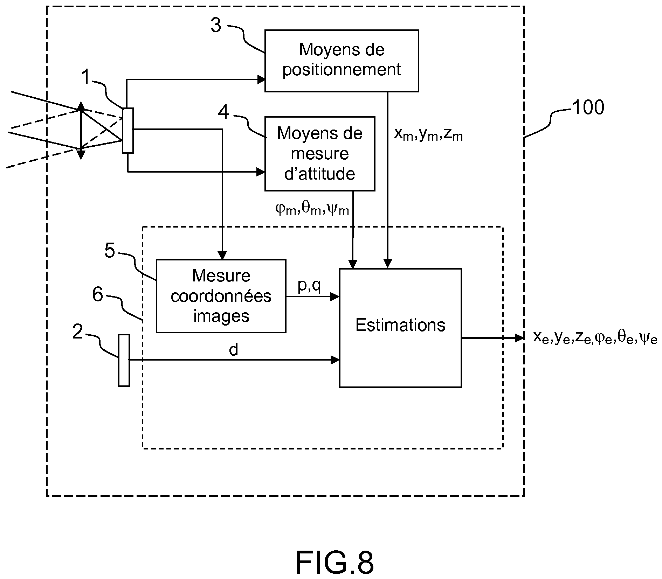

Le procédé de géo-référencement d'une zone est réalisé au moyen d'un système optronique d'imagerie 100 montré figure 8 qui comprend :

- un détecteur 1, tel qu'une caméra,
- un télémètre 2 dont la LdV est harmonisée sur la voie optronique du détecteur,
- des moyens 3 de positionnement du détecteur, tels qu'un dispositif GNSS, ou UMI éventuellement hybridées à l'aide d'un dispositif d'aide tels qu'un GPS, un viseur stellaire, un senseur d'horizon ...
- des moyens inertiels 4 de mesure de l'attitude de ce détecteur, tels qu'une centrale inertielle, ...
- des moyens 5 d'acquisition des coordonnées des points images correspondants aux points télémétrés utilisant un dispositif technologique approprié (miroir, fibres optiques, détecteur spécifique, ...) et un traitement de signal approprié.
- une unité de traitement 6 incluant des moyens de synchronisation des mesures de position, d'attitude, de l'image acquise et des distances, et incluant les moyens 5 d'extraction et mesure des coordonnées des points images. La référence de datation pour la synchronisation des mesures se fait de préférence sur l'information ayant la plus haute cadence des acquisitions images ou des mesures de distance.

De manière générale, le procédé comprend les étapes suivantes :

- acquisition de M images successives, au moyen du détecteur 1, la zone imagée étant répartie entre ces M images, avec $M \geq 1$,
- mesure par le télémètre 2 de P distances $d_1$, $d_2$, ..., $d_P$ entre le système et P points de la zone dits points télémétrés, avec $P \geq 3$, ces points télémétrés étant répartis dans K desdites images avec $1 \leq K \leq M$,
- acquisition par les moyens de positionnement 3, du positionnement $x_m$, $y_m$, $z_m$, du détecteur aux dates d'acquisition des M images,
- mesure par les moyens inertiels 4 de l'attitude $\varphi_m$, $\theta_m$, $\psi_m$ du détecteur 1 aux dates d'acquisition des M images,
- acquisition par les moyens 5, dans ces K images des coordonnées des points dits points images ($p_1$, $q_1$), ($p_2$, $q_2$), ..., ($p_P$, $q_P$) correspondant à ces P points télémétrés,
- estimation par l'unité de traitement 6, des paramètres de conditions de prise de vue ($x_e$, $y_e$, $z_e$, $\varphi_e$, $\theta_e$, $\psi_e$) correspondant aux M images, en fonction des mesures permettant le positionnement ($x_m$, $y_m$, $z_m$) et d'attitudes du détecteur ($\psi_m$, $\theta_m$, $\varphi_m$), des P distances et des coordonnées des P points images, en vue de corriger les erreurs sur les paramètres ($x_0$, $y_0$, $z_0$, $\psi_0$, $\theta_0$, $\varphi_0$) des M images.

De manière générale, l'estimation des paramètres caractérisant les CDPV de chacune des K images est réalisée à l'aide :

- des mesures de positionnement et d'attitude,
- des mesures de distance et,
- des coordonnées des points images
- d'un modèle de scène ou hypothèse pour le sol.

On décrit ci-dessous 4 utilisations exploitant plusieurs mesures de distance sur une zone imagée en vue d'améliorer la connaissance sur les paramètres décrivant les conditions de prise de vue (CPDV), apportée par des mesures voire de déterminer ces paramètres sans mesures angulaires.

Application (1) : amélioration d'attitude et hauteur avec 3 distances. On exploite une zone image contiguë disposant de 3 mesures distance pour déterminer explicitement la valeur des 2 angles ($\psi_0$ et $\theta_0$) caractérisant l'orientation de la LdV (hors dernière rotation autour de la LdV ($\varphi_0$) et la hauteur z0 du capteur (voir figure 2).

Il est important de rappeler que ces 3 paramètres comprennent les deux paramètres dont les erreurs de mesure influencent avec la plus grande criticité le géoréférencement de l'image en visée oblique forte (voir figure 1). Leur détermination à partir de mesures dont l'exactitude et la précision sont meilleures que celles portées par les mesures angulaires constitue un point fort du procédé selon l'invention.

Cette application constitue à la fois une illustration didactique et une présentation d'un concept de base du processus.

Application (2) : Densification de la surface terrestre sur la zone imagée. On exploite une redondance des mesures de distance et image en rapport au nombre de paramètre à estimer. Au-delà des 3 distances minimales nécessaires, chaque nouvelle distance apporte une mesure pertinente sur la distance à la scène au point visé et donc, pour une position du capteur et une attitude de l'image bien connues, une information pertinente en vue de positionner le point visé au sol. Déterminant l'altitude et la position de points épars, on densifie la connaissance initiale du modèle de sol. Le processus propose de considérer toutes les mesures dans leur intégralité dans une estimation jointe des paramètres de prise et des paramètres de scène. Cependant, et notamment dans l'intention d'en éclairer le sens, il est aussi possible d'utiliser une partie des mesures pour estimer les CPDV et l'autre pour connaître l'altitude sur les lieux du sol ayant fait l'objet d'une mesure.

Application (3) : aéro-latération avec un ensemble d'images et de mesures de distances. On exploite un ensemble d'image en recouvrement, des observations de primitives homologues entre images, des mesures de distance sur les images, un modèle de scène et des mesures approchées permettant d'initialiser les paramètres de prise de vue des images dans le but d'améliorer les paramètres de prise de vue de chaque image ainsi que ceux décrivant le modèle de scène. L'application se focalise essentiellement sur l'estimation des paramètres externes mais les paramètres internes constituée de la focale, des coordonnées du PPI et de la description de la distorsion optique peuvent aussi être estimés dans le cadre de cette application. On utilise la redondance des mesures de distances sur l'image pour densifier le modèle de scène et de la sorte améliorer les Mises En Correspondances (MEC) et le positionnement des extractions lors des itérations de l'estimation. Cette application présente la mise en oeuvre du processus dans le cadre d'une application opérationnelle dans sa dimension la plus générale.

Application (4) : exploitation d'amer. On exploite au moins 3 mesures de distance sur des points d'une zone imagée que l'on apparie à une donnée image de référence géoréférencée afin de calculer explicitement les paramètres externes de prises de vue et d'en améliorer la connaissance.

La suite donne quelques détails pour la mise en oeuvre de ces applications.

Application (1) : Amélioration des CPDV avec 3 distances

Pour une prise de vue perspective, les équations de colinéarité qui lient les coordonnées images et terrain permettent d'écrire la fonction de localisation associant un point du sol "G" de coordonnées $(x_k, y_k, z_k)$ à un pixel image comme :

$$\begin{pmatrix} x_k - x_0 \\ y_k - y_0 \\ z_k - z_0 \end{pmatrix} = \mu_k R(\psi_0, \theta_0, \varphi_0) \begin{pmatrix} p_k - p_0 \\ q_k - q_0 \\ -f_0 \end{pmatrix}$$

(équation 1)

Dans l'expression précédente on trouve,

- la focale "$f_0$" exprimée en pixels,
- les coordonnées (p0, q0) du Point Principal Image (PPI) dans le repère image (intersection de l'axe optique avec le plan image),
- le facteur $\mu_k$ représentant le facteur d'échelle,
- la matrice de rotation R décrivant l'attitude de l'image et dont les éléments $R_{ij}$ sont des fonctions trigonométriques des angles $(\psi, \theta, \varphi)$,
- la position du capteur (correspondant au point principal image) dans le repère géographique (x,y,z) notées $(x_0, y_0, z_0)$,
- les coordonnées des points télémétrés $(p_k, q_k)$ dans le repère image et $(x_G, y_G, z_G)$ dans le repère géographique.

La matrice de rotation R caractérisant l'attitude de l'image s'écrit sous sa représentation minimale en fonction des 3 angles d'Euler $(\psi_0, \theta_0, \varphi_0)$ :

$$R = R_{\psi/z} R_{\theta/z} R_{\varphi/z} = \begin{bmatrix} R_{11} & R_{12} & R_{13} \\ R_{21} & R_{22} & R_{23} \\ R_{31} & R_{32} & R_{33} \end{bmatrix}$$

ou de manière plus développée :

$$R = \begin{bmatrix} Cos\,\psi_0 Cos\,\theta_0 & -Sin\,\psi_0 Cos\,\varphi_0 + Cos\,\psi_0 Sin\,\theta_0 Sin\,\varphi_0 & Sin\,\psi_0 Sin\,\varphi_0 + Cos\,\psi_0 Sin\,\theta_0 Cos\,\varphi_0 \\ Sin\,\psi_0 Cos\,\theta_0 & Cos\,\psi_0 Cos\,\varphi_0 + Sin\,\psi_0 Sin\,\theta_0 Sin\,\varphi_0 & -Cos\,\psi_0 Sin\,\varphi_0 + Sin\,\psi_0 Sin\,\theta_0 Cos\,\varphi_0 \\ -Sin\,\theta_0 & Cos\,\theta_0 Sin\,\varphi_0 & Cos\,\theta_0 Cos\,\varphi_0 \end{bmatrix}$$

L'équation (1) est donnée en absence de distorsion sur l'image. Dans la pratique, celle-ci est évaluée au moyen d'une grille ou d'un modèle paramétrique liant la position d'un pixel idéal (en absence de distorsion) de coordonnées image (p, q) à la position du pixel réel (avec distorsion) de coordonnées (p',q') dans l'image. L'effet principal de la distorsion est d'introduire une déformation radiale sur les coordonnées pixel (p,q) parfaites en les transformant en (p',q') selon la forme suivante :

$$p' = p_c + L(r)(p - p_c)$$

$$q' = q_c + L(r)(q - q_c)$$

$$r = \sqrt{(p - p_c)^2 + (q - q_c)^2}$$

où le pixel de coordonnées $(p_c, q_c)$ correspond au centre de la distorsion aussi appelé Point Principal de Symétrie (PPS).
La fonction L( r ) est définie pour r > 0 et L(0) = 1 avec une approximation par développement de Taylor à l'ordre N :

$$L(r) = 1 + K(r) = 1 + \sum_{n=1}^{N} K_n\, r^n$$

En tenant compte du fait que les corrections de distorsion restent faible en regard de la taille des images, les équations précédentes s'inversent en s'écrivant :

$$p = \frac{p' + K(r)\,p_c}{1 - K(r)} \approx p' - K(r)(p' - p_c)$$

$$q = \frac{q' + K(r)\,q_c}{1 - K(r)} \approx q' - K(r)(q' - q_c)$$

Ainsi, on note que la prise en compte de la distorsion se limite, sous ce type de modélisation, à un complément d'estimation linéaire de paramètres. Cette étape représente donc une complexité assez faible qui permettra :

- soit d'envisager l'utilisation de valeurs de paramètres déjà mesurés lors d'une étape de calibrage au sol,
- soit d'estimer ces paramètres, en complément des paramètres externes, au sein du processus proposé, en introduisant, par exemple à l'ordre 1, un paramètre de modélisation $K_1$ supplémentaire.

Parmi les 3 quantités observables suivantes :

- la coordonnées $z_0$ correspondant à la cote du capteur dans le repère géographique,
- la rotation $\varphi$ de l'image autour de l'axe de prise de vue (aussi appelée déversement ou dérotation),
- la rotation $\theta$ de l'image par rapport au plan horizontal (définissant l'inclinaison en site),

on cherche en particulier à calculer le site qui représente la contribution de sensibilité prépondérante aux erreurs d'attitude.

Pour N points images télémétrés, on peut écrire les 2 N relations suivantes à partir de la fonction de localisation du capteur (équation 1) pour écrire les relations suivantes :

$$x_k - x_0 = \frac{R_{11}p_k + R_{12}q_k - R_{13}f}{R_{31}p_k + R_{32}q_k - R_{33}f}(z_k - z_0) \quad ; \quad y_k - y_0 = \frac{R_{21}p_k + R_{22}q_k - R_{23}f}{R_{31}p_k + R_{32}q_k - R_{33}f}(z_k - z_0)$$

L'équation de mesure de la distance entre la position du capteur et un point particulier du sol s'exprime par ailleurs comme :

$$d_k = \sqrt{(x_k - x_0)^2 + (y_k - y_0)^2 + (z_k - z_0)^2} + v_k$$

(équation 2)

En remplaçant cette dernière dans les expressions précédentes et en oubliant le bruit de mesure v, on obtient en exploitant les propriétés d'orthogonalité de matrice de rotation "R" l'expression d'observation suivante :

$$R_{31}p_k + R_{32}q_k - R_{33}f = \pm\frac{z_k - z_0}{d_k}\sqrt{p_k^2 + q_k^2 + f^2}$$

(équation 3)

Notons que les grandeurs $R_{3n}$ ne font intervenir que les angles $\varphi$ et $\theta$ ce qui traduit la non observabilité de $\psi$ (angle de rotation autour de l'axe vertical). Dans cette expression, le signe dépend du facteur de colinéarité $\mu$ qui peut être construit comme étant >0 (en plaçant l'image à l'opposé ou en avant du centre optique - cliché négatif). Cette opération est rendue possible par la symétrie centrale autour du PPI en inversant les 3 axes de coordonnées (p, q, f) du repère image.

En désignant par $m_k$ la quantité qui ne dépend que des mesures (coordonnées image du point k, distance au sol associée à la direction du point k et hauteur du capteur $z_k$) ainsi que l'information ou l'hypothèse sur la hauteur sol ($z_0$) :

$$m_k = \pm\frac{z_k - z_0}{d_k}\sqrt{p_k^2 + q_k^2 + f^2}$$

(équation 4)

Des expressions sont obtenues pour les deux angles, lorsque les 3 points image (pk, qk), ne sont pas alignés. Sans en décrire les détails, d'écriture, les calculs permettent d'exprimer :

- l'angle de site d'après la forme :

$$\boxed{\sin\theta_e = \frac{(m_2 - m_3)(q_1 - q_2) - (m_1 - m_2)(q_2 - q_3)}{(q_2 - q_3)(p_1 - p_2) - (q_1 - q_2)(p_2 - p_3)}}$$

(équation 5)

- l'angle de déversement d'après la forme :

$$\boxed{\tan \varphi_e = \frac{m_1^2\left(p_2 - p_3\right) + m_2^2\left(p_3 - p_1\right) + m_3^2\left(p_1 - p_2\right)}{m_1^2\left(q_3 p_2 - q_2 p_3\right) + m_2^2\left(q_1 p_3 - q_3 p_1\right) + m_3^2\left(q_2 p_1 - q_1 p_2\right)}}$$

(équation 6)

- la cote du capteur, en posant :

$$A_2 = \mu_1\left(q_2 - q_3\right) + \mu_2\left(q_3 - q_1\right) + \mu_3\left(q_1 - q_2\right)$$

$$A_1 = \mu_1\left(q_2 - q_3\right)z_1 + \mu_2\left(q_3 - q_1\right)z_2 + \mu_3\left(q_1 - q_2\right)z_3$$

$$A_0 = \mu_1\left(q_2 - q_3\right)z_1^2 + \mu_2\left(q_3 - q_1\right)z_3^2 + \mu_3\left(q_1 - q_2\right)z_3^2$$

$$\mu_k = \frac{p_k^2 + q_k^2 + f^2}{d_k^2}$$

soit, une cote du capteur vérifiant l'expression :

$$\left[\mu_1\left(q_2 - q_3\right) + \mu_2\left(q_3 - q_1\right) + \mu_3\left(q_1 - q_2\right)\right]z_0^2$$
$$- 2\left[\mu_1\left(q_2 - q_3\right)z_1 + \mu_2\left(q_3 - q_1\right)z_2 + \mu_3\left(q_1 - q_2\right)z_3\right]z_0$$
$$+ \mu_1\left(q_2 - q_3\right)z_1^2 + \mu_2\left(q_3 - q_1\right)z_3^2 + \mu_3\left(q_1 - q_2\right)z_3^2 = 0$$

$$\boxed{z_e = \frac{A_1 \pm \sqrt{A_1^2 - A_2 A_0}}{A_2}}$$

ou encore :

$$\boxed{\begin{aligned} z_e = \left[\mu_1\left(q_2 - q_3\right) + \mu_2\left(q_3 - q_1\right) + \mu_3\left(q_1 - q_2\right)\right]^{-1}\left[\mu_1\left(q_2 - q_3\right)z_1 + \mu_2\left(q_3 - q_1\right)z_2 + \mu_3\left(q_1 - q_2\right)z_3 \pm \right. \\ \left. \sqrt{\mu_1\mu_2\left(q_3 - q_1\right)\left(q_3 - q_2\right)\left(z_1 - z_2\right)^2 + \mu_2\mu_3\left(q_1 - q_2\right)\left(q_1 - q_3\right)\left(z_2 - z_3\right)^2 + \mu_3\mu_1\left(q_2 - q_3\right)\left(q_2 - q_1\right)\left(z_3 - z_1\right)^2}\right. \end{aligned}}$$

(équation 7)

On note que la circularité de ces expressions en fonction des mesures (1, 2, 3) traduit l'interchangeabilité du rôle des 3 points ($P_1$, $P_2$, $P_3$).
Par ailleurs, on note que :

- la forme analytique et la simplicité de ces expressions sont favorables pour étudier la sensibilité des valeurs obtenues. On peut par exemple utiliser la technique de propagation des covariances, pour étudier en particulier l'impact :

  ◦ de l'erreur sur les paramètres (angles et hauteur) en fonction d'erreur sur les 3 mesures (p,q), les 3 distances et la position z des points sur le terrain.

∘ de répartition des mesures dans les images ou au sol ($\Delta z_k$) sur le résultat selon les valeurs des CPDV.

- les hauteurs capteur et sol interviennent uniquement en différence ce qui correspond au fait que l'attitude de l'image est connue de manière relative par rapport au sol.
- pour disposer des valeurs z du plan on peut utiliser les informations approchées d'attitude et/ou un modèle de sol (z(x,y)).L'obtention de meilleures attitudes images et hauteurs capteur permettent d'améliorer la connaissance sur la hauteur du sol. Le processus peut alors être réitéré en partant de meilleures informations que celles associées aux mesures initiales. Ceci permet notamment d'améliorer la connaissance sur la hauteur des points du sol par utilisation du MNT ainsi que de linéariser le système d'observation au plus proche de la valeur vraie en cas de traitement de mesures redondantes (plus de 3 distances).

Application (2) : Modélisation et densification de la surface terrestre sur la zone imagée

Pour le traitement du terrain, différentes utilisations peuvent être proposées selon que le sol doit être :

- Utilisé en tant que simple information disponible ; il est dans ce cas complément connu d'après l'hypothèse ou le modèle plus ou moins fin disponible,
- Densifié par l'estimation de hauteurs complémentaires sur les lieux des mesures de distance, selon une maille plus fine que le modèle originel connu a priori.
- Raffiné ou estimé dans sa globalité à partir des mesures relevées par le capteur.

Pour utiliser un modèle disponible, l'approche proposée consiste à modéliser la surface de la scène sous forme paramétrique et à utiliser des fonctions de bases polynomiales pour la développer. Pour cela, on adopte une discrétisation du domaine d'intérêt sous forme d'une grille régulière. On utilise les informations de hauteur situées sur les noeuds (i,j) de la grille, pour déterminer les paramètres "$h_{ij}$" d'un modèle de la forme :

$$z(x,y) = \sum_{i,j}^{I,J} c_{ij}(x,y) h_{ij}$$

(équation 8)

Ce développement de l'altitude (ou hauteur) utilise des fonctions de base "$c_{ij}$" sous forme de polynômes en puissances de x et de y selon différentes représentations comme par exemple :

- des polynômes à support bornés de la forme :

$$c_{ij}(x,y) = \left(1 - \frac{x - x_{ij}}{x_{i+1,j} - x_{ij}} \frac{x - x_{ij}}{x_{i,j} - x_{i-1,j}}\right)\left(1 - \frac{y - y_{ij}}{y_{i+1,j} - y_{ij}} \frac{y - y_{ij}}{y_{i,j} - y_{i-1,j}}\right)$$

- des splines conduisant à exprimer sur la zone l'altitude d'après les valeurs connues sur les noeuds d'une grille régulière [PxQ] comme :

$$z(x,y) = \begin{pmatrix}1 & y & \ldots & y^{N-1}\end{pmatrix} U_{NxP} \; H_{PxQ} \; V_{QxM} \begin{pmatrix}1 & x & \ldots & x^{M-1}\end{pmatrix}^T$$

où U et V sont des matrices fixées, de dimensions respectives NxP et QxM. La matrice H de dimension (PxQ) représente la matrice des coefficients qui sont estimés. Pour N=M=4 et sur un support de la grille normalisé à [-1,1]², la matrice U=V$^T$ et s'écrit par exemple :

$$U = \frac{1}{4} \begin{pmatrix} 0 & 4 & 0 \\ -2 & 0 & 2 \\ 3 & -6 & 3 \\ -1 & 2 & -1 \end{pmatrix}$$

Dans la pratique, l'un des deux développements précédents permet d'exprimer z sous une même forme de fonction linéaire des coefficients $h_{ij}$ qui sont connus d'après l'information disponible a priori.

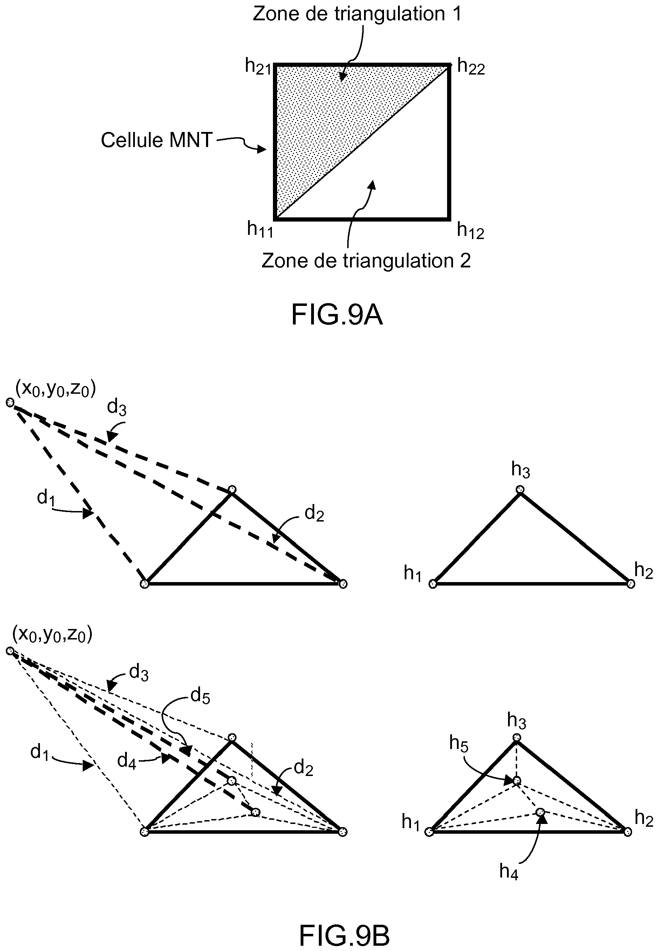

Pour densifier un modèle existant, on utilise encore la modélisation précédente (équation 8) et une information initiale disponible sur le terrain. On propose de densifier l'information spatiale d'origine connue sur les noeuds d'une grille régulière dont le pas correspond par exemple à un standard de MNT de niveau 1 (pas de 90 mètres environ à l'équateur). Ce MNT permet d'initialiser des cellules triangulaires comme indiqué sur la figure 9a. Pour réaliser la densification, l'altitude est déterminée hors des points initiaux de la grille à partir des observations disponibles puis le modèle de surface est complété par triangulation comme présenté sur la figure 9b. Cette figure illustre par exemple comment la détermination de 2 points au sein d'une facette initiale de la grille, sur laquelle l'altitude varie sur un plan unique, conduit à sa subdivision en 5 facettes correspondant chacune à un plan différent de l'espace.

Avec un nombre de mesures distance > 3, on peut utiliser l'information complémentaire pour densifier le modèle de scène sur les points où sont réalisées les mesures distance. Comme les projections des distances au sol ne se répartissent pas selon une grille régulière, la densification obtenue conduit à un enrichissement d'un MNT sous forme triangulaire sans que cela ne pose un problème quant à son utilisation future (figure 9).

Pour estimer un modèle, on part d'une hypothèse ou d'un modèle (grossier) existant sur la zone, ou d'une estimation obtenue à la $n^{ieme}$ itération. On recherche, au moyen d'un processus d'estimation ou mise en cohérence de l'ensemble des informations disponibles tels que celui décrit dans l'application 3, une correction à appliquer sur l'altitude sous la forme suivante :

$$z_n = h(x_n, y_n) + \Delta z_n = \sum_{i,j} c_{ij}(x, y) h_{ij} + \Delta z_n$$

où les $h_{ij}$ sont les altitudes déterminées sur les noeuds de la grille lors d'une itération précédente du processus d'estimation.

Notons que l'équation d'observation (équation 3) reste valable si l'altitude $z_k$ est modélisée par une forme plus générale.

$$R_{31} p_k + R_{32} q_k - R_{33} f = \pm \frac{\sum_{i,j}^{I,J} c_{ij}(x, y) h_{ij} - z_0}{d_k} \sqrt{p_k^2 + q_k^2 + f^2}$$

(équation 9)

Ainsi, les coefficients du développement de l'altitude peuvent être regroupés avec les éléments de rotation pour résoudre le système linéaire :

$$AX = B + v$$

où v est un terme du premier ordre rendant compte des erreurs de mesure.

En absence d'information initiale d'altitude, il est aussi possible d'estimer un modèle de sol. Le plus simple consiste à modéliser la surface comme un plan moyen à l'échelle de la zone couverte par les images. L'altitude évolue alors sur un plan de l'espace comme :

$$z = h_{00} + h_{10}.x + h_{01}y$$

Dans cette expression, $h_{00}$ représente l'altitude à l'origine alors que $h_{10}$ et $h_{01}$ représentent respectivement les pentes dans les deux directions x et y. Avec ce modèle plan on écrira par exemple :

$$X = \begin{bmatrix} R_{31} & R_{32} & h_{00} & h_{10} & h_{00} \end{bmatrix}^{T}$$

$$A = \begin{pmatrix} p_1 - p_K & q_1 - q_K & 1/d_K - 1/d_1 & x_K/d_K - x_1/d_1 & y_K/d_K - y_1/d_1 \\ \vdots & \vdots & \vdots & \vdots & \vdots \\ p_{K-1} - p_K & q_{K-1} - q_K & 1/d_K - 1/d_{K-1} & x_K/d_K - x_{K-1}/d_{K-1} & y_K/d_K - y_{K-1}/d_{K-1} \end{pmatrix}$$

$$B = -z_0 \begin{bmatrix} \dfrac{\sqrt{p_1^2 + q_1^2 + f^2}}{d_1} - \dfrac{\sqrt{p_K^2 + q_K^2 + f^2}}{d_K} \\ \vdots \\ \dfrac{\sqrt{p_{K-1}^2 + q_{K-1}^2 + f^2}}{d_{K-1}} - \dfrac{\sqrt{p_K^2 + q_K^2 + f^2}}{d_K} \end{bmatrix}$$

Avec 6 mesures de distance, on détermine exactement (au bruit v de mesure près) la quantité X ce qui donne à la fois :

- les informations sur les CPDV comme indiqué précédemment et,
- les paramètres caractérisant la surface terrestre par un plan approché.

Avec davantage de mesures, on estime le système précédent :

- soit par moindres carrés en traitant l'ensemble des observations,
- soit de manière itérative au fur et à mesure de la disponibilité des observations de distance. Cette approche permet d'affiner au cours du temps l'estimation des paramètres du système.

Ainsi le processus proposé est capable de densifier ou d'améliorer un modèle de sol initial approché de la scène soit de le construire ab-initio.

Les processus de densification ou d'estimation du modèle représentant la surface du sol présentent différents avantages puisqu'ils permettent notamment de meilleures performances pour :

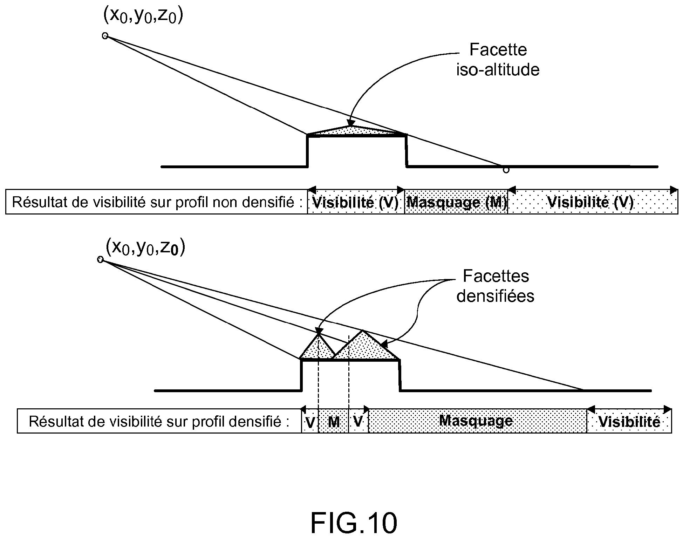

- la localisation à base de techniques passives qui procède par intersection de la direction d'un pixel avec le modèle de scène.
- des applications reposant sur la visibilité ou l'inter-visibilité (figure 10) :

   ∘ soit directement depuis la position du capteur dans une direction ou sur une zone donnée sur un profil de zone,
   ∘ soit indirectement entre systèmes tiers qui utiliseraient l'information élaborée au sein du capteur.

Application (3) : aéro-latération

Nous proposons cette appellation pour rappeler que le processus proposé constitue une extension du processus d'aéro-triangulation classique qui procède sans utilisation de mesure distance. Pour cette application on note :

- E[X] l'espérance de la variable aléatoire X,
- $\delta(X) = X - X^*$ où $X^*$ désigne la valeur vraie, ou idéale, de la grandeur X,
- $\Lambda_X$ la matrice de covariance de X.

Les quantités $\Lambda$ et $\sigma$ représentent les covariances a priori sur les paramètres.

Pour cette application, on dispose :

- De K images dont on cherche à améliorer les paramètres de prise de vue $\Theta_k$ (k=1...K). Notons qu'avec les seuls 6 paramètres externes, le vecteur $\Theta_k$ s'écrit $(x_k, y_k, z_k, \varphi_k, \theta_k, \psi_k)^T$. Les paramètres de prise de vue sont initialisés, pour chaque image, avec les valeurs mesurées $(x_m, y_m, z_m, \varphi_m, \theta_m, \psi_m)$ et la covariance $\Lambda_m$ associée. On exprime l'écart ou le résidu entre la valeur initiale du vecteur des paramètres de prise de vue $\Theta$ et sa valeur idéale $\Theta^*$ ainsi que sa covariance $\Lambda_\Theta$ par les expressions suivantes :

$$\delta_{\Theta_k} = \Theta_k - \Theta^*$$

$$\Lambda_{\Theta_k} = E\left[\Theta_k \Theta_k^T\right]$$

- de points image P de coordonnées $(p_{ki}, q_{ki})$ mis en correspondance sur un objet $G_i$ de coordonnées sol $(x_i, y_i, z_i)$ sur l'image k dispose, selon la fonction de localisation $G_\Theta$ caractérisant la géométrie de prise de vue, d'un résidu et d'une covariance :

$$\delta_{P_{ik}} = \begin{pmatrix} x_{Gi} - x_{ki} & y_{Gi} - y_{ki} & z_{Gi} - z_{ki} \end{pmatrix}$$

$$\begin{pmatrix} x_{ki} \\ y_{ki} \\ z_{ki} \end{pmatrix} = G(\Theta_k, p_{ki}, q_{ki})$$

$$\Lambda_{P_{ik}} = E\left[ \begin{pmatrix} x_{ki} \\ y_{ki} \\ z_{ki} \end{pmatrix} \begin{pmatrix} x_{ki} & y_{ki} & z_{ki} \end{pmatrix} \right]$$

Dans l'expression précédente, la quantité $z_{ki}$ est évaluée d'après le modèle de scène :

$$z_{ki} = \sum_{m,n} c_{mn}(x_{ki}, y_{ki}) h_{mn}$$

- de distances capteur-terrain mesurées sur le point au sol $G_i$ depuis la position capteur $S_k$ qui à pour résidus et covariance :

$$\delta_d = d_{ki} - d_{ki}^*$$

$$\Lambda_{d_{ki}} = E\left[d_{ki} d_{ki}^T\right] = \sigma_{d_{ki}}^2$$

$$d_{ki} = \sqrt{(x_{Gi} - x_{ki})^2 + (y_{Gi} - y_{ki})^2 + (z_{Gi} - z_{ki})^2}$$

- d'éventuels points d'amers ponctuels $A_i$ (voir application 4) de coordonnées géographiques $(x_i, y_i, z_i)$, dont on considère pour l'un d'entre eux, le résidu et la covariance :

$$\delta_{A_i} = A_i - A_i^*$$

$$\Lambda_{A_i} = E\left[A_i A_i^T\right]$$

Disposant d'un ensemble d'image et d'observation, les paramètres de prise de vue de l'ensemble desimages sont alors obtenus en minimisant la somme quadratique "J" des différents résidus précédents soit l'expression :

$$\Theta = \min J$$

$$J = J_M + J_\Theta + J_T$$

- la contribution des observations est donnée par :

$$J_M = \sum_{i=1}^{I}\left[\sum_{k=1}^{K}\left\{\left(\delta_{P_{ik}}\Lambda_{P_{ik}}^{-1}\delta_{P_{ik}}^T\right) + \sum_{k=1}^{K}\left(\frac{\delta_{d_{ik}}\delta_{P_{ik}}^T}{\sigma_{d_{ik}}^2}\right)\right\} + \delta_{A_i}\Lambda_{A_i}^{-1}\delta_{A_i}^T\right]$$

- la contribution des paramètres de prise de vue est donnée par :

$$J_\Theta = \sum_{k=1}^{K}\delta_{\Theta_k}\Lambda_{\Theta_k}^{-1}\delta_{\Theta_k}^T$$

- la contribution du modèle de terrain est donnée par :

$$J_T = \sum_{i=1}^{K}z_i\Lambda_{T_i}^{-1}z_i^T$$

Sans chercher à résoudre le système de manière spécifique, puisqu'il dépend du nombre d'images, de primitives de liaison et de l'occurrence de la présence des primitives sur l'ensemble des images, la structure des équations à résoudre conduit à un système linéaire matriciel. La taille du système, qui dépend du nombre d'image, de primitives MEC et du nombre de distances, est assez grande mais celui-ci est aussi très creux du fait que les MEC ne couplent qu'un petit nombre d'images. La matrice du système est d'autant plus creuse que le nombre d'apparitions de chaque primitive sur plus de deux images est faible et que le nombre d'images est grand.

On note qu'une autre approche possible consiste à procéder en deux étapes :

1) orienter relativement entres elles toutes les images par une technique classique d'aéro-triangulation (sans prendre en compte les mesures de distance) pour obtenir un bloc image de géométrie cohérente. Cette étape raffine notamment les orientations relatives entre les images et permet d'obtenir un bloc image constitué à partir des images contiguës.

2) traiter le bloc image précédent comme une image unique selon l'application (1) en disposant d'au moins 3 distances.

Application (4) : CPDV par télémétries de points d'amer

Cette application permet de calculer les paramètres de prise de vue par télémétrie de points d'amers et d'améliorer les valeurs des paramètres obtenues à partir de mesures approchées. On qualifie la procédure de relèvement actif. Pour cette application, le système optronique accède à une information géographique lui permettant, par un traitement approprié, d'apparier cette information pouvant se réduire à un minimum de 3 points d'amer. Il est alors possible d'estimer l'ensemble des 6 paramètres externes en télémétrant des objets de coordonnées connues (points d'amers).

Les mesures approchées de position du capteur et de son attitude image permettent notamment de mettre en correspondance les points télémétrés dans l'image à une donnée image de référence afin de disposer des coordonnées de ces points terrain. Dans le détail, cette approche utilise les mesures $(x_m, y_m, z_m, y_m, \theta_m, \varphi_m)$, fournissant des CPDV

permettant de géo-référencer l'image de manière approchée et de fixer des coordonnées géographiques aux primitives extraites au moyen de la fonction de localisation ; dont le paramètre $\Theta_m$ est initialisé d'après les mesures. Ce géoréférencement des primitives permet de les apparier par une procédure automatique aux amers de la donnée de référence et ainsi de corriger les coordonnées géographiques qui leur avaient initialement été affectées à partir des mesures des CPDV. Les primitives peuvent alors être considérées comme des amers $G_{ke}$ dont les coordonnées au sol $(x_k, y_k, z_k)$ disposent d'une qualité des données de référence (classe de quelques mètres), dont les coordonnées images $(p_k, q_k)$ sont connues d'après le traitement du signal avec une qualité d'extraction de l'ordre du pixel et dont la distance à la scène $(d_k)$ est mesurée d'après le télémètre avec une qualité métrique.

Cette approche diffère de la précédente par le fait que l'on dispose d'une information de référence dans la scène (les coordonnées géographiques des points au sol Gke)

Au problème de relèvement classique, qui repose dans son principe sur des coordonnées images (et donc des directions) et des points d'amer pour estimer l'ensemble des 6 paramètres (dont la position du capteur et l'attitude de l'image), on propose une généralisation en ajoutant aux informations traditionnelles les mesures de distance. Cet apport complémentaire d'information présente deux avantages :

- la possibilité de calculer la position du capteur et l'attitude de l'image sans résoudre des équations fortement non-linéaires comme pour le processus classique de relèvement,
- l'apport d'une meilleure performance sur les CPDV estimées.

Cette technique de relèvement actif procède comme suit :

- on utilise la fonction de localisation (équation 1) écrite pour chaque amer de l'image.
- dans cette équation $(x_0, y_0, z_0)$ sont les coordonnées du capteur dans un repère cartésien et $(\psi_0, \theta_0, \varphi_0)$ sont les angles qui sont initialement obtenus d'après les mesures approchées, $(p_0, q_0,)$ sont les coordonnées du point principal image (prise dans la suite au centre image pour alléger l'écriture des équations) et $f_0$ est la focale du capteur (en unité pixel). On note que le facteur de proportionnalité $\mu_k$ est propre à chaque point du terrain ou direction de l'image.

    i. Pour chaque point d'amer $G_k$ du sol dont on connaît les coordonnées $(x_k, y_k, z_k)$ et visible dans la zone imagée, on dispose : des mesures coordonnées image $(p_k, q_k)$ et de la distance $d_k$, l'équation de colinéarité présente l'inconnue $\mu_k$,

    ii. Pour chaque image on dispose de 6 inconnues de faisceau, ou de prise de vue, $(x_0, y_0, z_0, \psi_0, \theta_0, \varphi_0)$

    iii. Au total, pour M points d'amers on dispose de 3M équations de colinéarité et d'un nombre de 6+M inconnues (paramètres de faisceau + M valeurs $\mu_k$). Avec un nombre de points M≥3 (pour assurer 3M≥6+M), on dispose alors de l'information suffisante pour estimer les paramètres de prise de vue.

- On propose alors le schéma de calcul suivant :

    i. On calcule la position du capteur d'après les mesures distances sur les 3 points selon (équation 2). En écrivant ces 3 équations, on obtient par différence de deux d'entres-elles à la troisième 2 équations linéaires en $x_0$, $y_0$, et $z_0$. Celles-ci permettent d'obtenir par exemple $z_0$ comme expression linéaire de $x_0$ et de $y_0$. Ces expressions reportées dans l'expression quadratique donnent $z_0$, comme solution d'une équation du second degré et donc 2 solutions en z pour la position du capteur. Ainsi, les deux équations linéaires permettent d'obtenir une position $(x_e, y_e, z_e)$ pour chacune des deux valeurs de z, la solution retenue correspondant à celle la plus proche des mesures $(x_m, y_m, z_m)$.

    ii. On calcule ensuite le facteur $\mu_k$. pour chaque amer en écrivant l'égalité de norme entre les 2 vecteurs de part et d'autre de l'équation de colinéarité et on obtient en exploitant les propriétés de norme des colonnes et lignes des vecteurs de la matrice de rotation et la nullité de leur produit scalaire :

$$\mu_k = \frac{d_k}{\sqrt{(p_k - p_0)^2 + (q_k - q_0)^2 + f_0^{\,2}}} \quad k = \{1,2,3\}$$

    iii. L'attitude $(\psi_e, \theta_e, \varphi_e)$ de l'image, est ensuite calculée avec deux approches possibles :

        1. soit en utilisant les mesures disponibles et les quantités précédemment calculées. En utilisant les mesures, on dispose d'une orientation approchée $(\psi_m, \theta_m, \varphi_m)$, puis on linéarise le problème en écrivant :

$$R(\psi_e, \theta_e, \varphi_e) = R(\psi_m, \theta_m, \varphi_m)\, r(\delta\psi_e, \delta\theta_e, \delta\varphi_e)$$

Les 3 rotations élémentaires ($\delta\psi_e$, $\delta\theta_e$, $\delta\varphi_e$) sont, au premier ordre, solution d'un système linéaire.

2. soit sans utiliser les mesures d'attitude. Dans cette approche on recherche les 9 paramètres de la matrice de rotation R à partir des 9 relations fournies par les 3 équations de colinéarité sur les 3 amers. L'avantage de cette approche est de résoudre un système linéaire de 9 équations à 9 inconnues correspondant aux 9 paramètres de la matrice de rotation. Les angles recherchés ($\psi_e$, $\theta_e$, $\varphi_e$) sont alors obtenus, en notant $R_{ij}$ l'élément de la ligne i et colonne j de la matrice R, d'après :

$$\psi_e = \arctan2\left(R_{12}, R_{11}\right)$$

$$\theta_e = -\arcsin\left(R_{31}\right)$$

$$\varphi_e = \arctan2\left(R_{32}, R_{33}\right)$$

- Disposant d'une procédure pour calculer analytiquement les paramètres de faisceau au moyen de 3 points d'amer, la disponibilité de plus de 3 points permet de résoudre le problème direct en linéarisant les équations d'observation autour de la solution ($x_e$, $y_e$, $z_e$, $\psi_e$, $\theta_e$, $\varphi_e$) obtenue dans l'étape précédente.

Ainsi en utilisant des données image de référence, le procédé proposé peut améliorer et simplifier la procédure d'estimation des paramètres (xe, ye, ze, ψe, θe, φe) en appariant automatiquement l'image acquise avec les points télémétrés à la donnée de référence.

Pour les différentes applications présentées, un intérêt majeur du procédé selon l'invention réside dans l'amélioration de la connaissance sur la dépression $\theta_e$, et la hauteur de vol $z_e$, qui sont les 2 paramètres les plus sensibles du bilan de géo-référencement comme décrit dans le préambule en relation avec les figures 1.

Le déversement, ou rotation $\varphi_e$ du détecteur autour de la LdV présente aussi un intérêt puisque cette grandeur n'est pas toujours mesurée, ni même spécifiée en termes de performance, selon la mécanisation retenue pour l'orientation de la tête du capteur optronique.

Un autre intérêt de l'approche repose sur la cohérence des informations utilisées tant sur la complémentarité de la nature des erreurs (exactitude de distance et précision angulaire) que sur l'ordre de performance voisin du mètre.

Les acquisitions du positionnement et des mesures d'attitude ne sont généralement pas réalisées aux mêmes dates, ni même aux dates d'acquisition des images. Dans ce cas, il faut prévoir une étape de synchronisation de ces acquisitions de mesures sur les dates d'acquisition des images. Ces positionnements et attitudes sont aussi synchronisés avec les mesures de distance.

Selon un premier mode de réalisation du procédé, décrit en relation avec les figures 2 et 3, une seule image est acquise et P points sont télémétrés dans cette image (M=K=1 sur les deux figures, P=3 sur la figure 2 et P=5 sur la figure 3). Cela permet de réaliser le géo-référencement de la zone imagée de manière quasi-instantanée avec l'acquisition d'un nombre ajustable de distances par le télémètre.

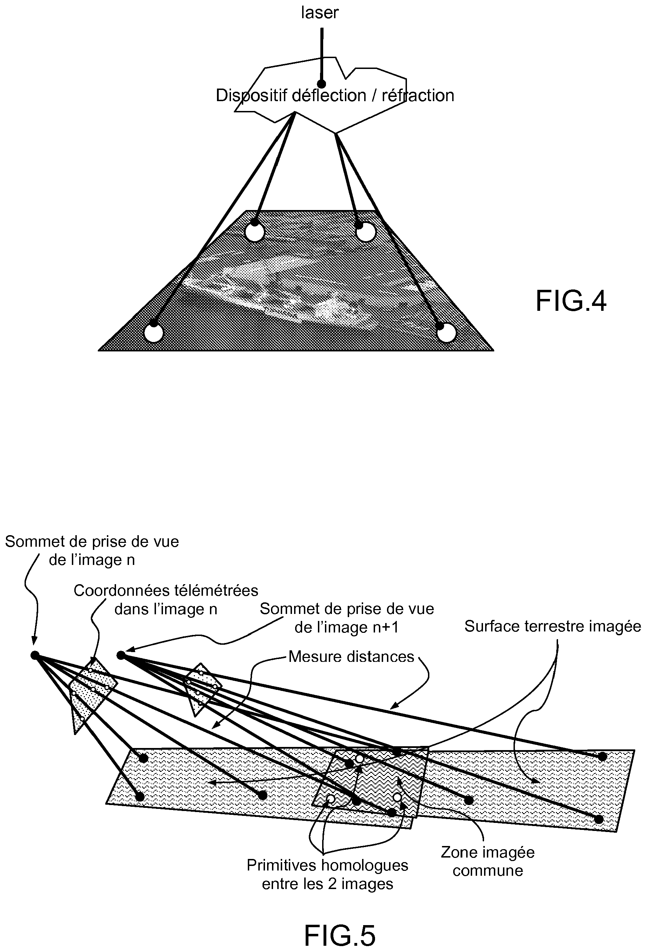

Comme illustré figure 4, pour obtenir ces P distances dans une même image, le télémètre est par exemple équipé de moyens de séparation du faisceau émis en P faisceaux séparés, chaque faisceau séparé visant un point à télémétrer ; dans ce cas, l'énergie Ep d'un faisceau séparé est inférieure à Et / P, Et étant l'énergie totale du faisceau avant qu'il ne soit séparé.

Selon une alternative, le télémètre est équipé de moyens de déflexion rapide du faisceau, cette déflexion étant telle que la durée d'acquisition de chaque distance est inférieure ou égale au rapport de la durée d'acquisition de cette image au nombre de télémétries P. Les techniques les plus classiques de déflexion de faisceau laser utilisent des prismes ou des miroirs tournants. On peut aussi utiliser des dispositifs avec éléments de réflexion ou de réfraction orientables, à déflecteur biréfringent et à interférences. Des techniques plus récentes utilisent des composants acousto-optiques, des MEMS pour difracter le faisceau laser dans différentes directions. Un système à fibre optique peut aussi être utilisé efficacement pour réaliser cette fonction en apportant les faisceaux laser sur des lieux privilégiés en terme de répartition relative dans l'image. Cet apport peut être simultané dans les différentes fibres ou séquentiel de façon à apporter toute la puissance laser disponible dans chaque fibre. Dans ce principe chaque fibre peut être doublée pour l'analyse du signal à la réception. La fonction peut aussi être réalisée avec un échantillonnage spatial plus dense en utilisant directement un détecteur matriciel réalisant simultanément la fonction imagerie et la fonction télémétrie.

Quelle que soit l'approche utilisée, celle-ci permet de disposer d'un nombre important de télémétries ce qui améliore la performance, par la redondance des mesures distance, et permet leur contrôle de cohérence afin de détecter des artéfacts (de type multi-trajet)

Selon une autre alternative, la divergence du laser du télémètre couvre l'ensemble de l'image et la réception du télémètre est matricielle.

En général le nombre de points télémétrés est le même pour chaque image mais pas nécessairement.

Plus il y a de points télémétrés dans une image, plus le résultat obtenu est performant et robuste.

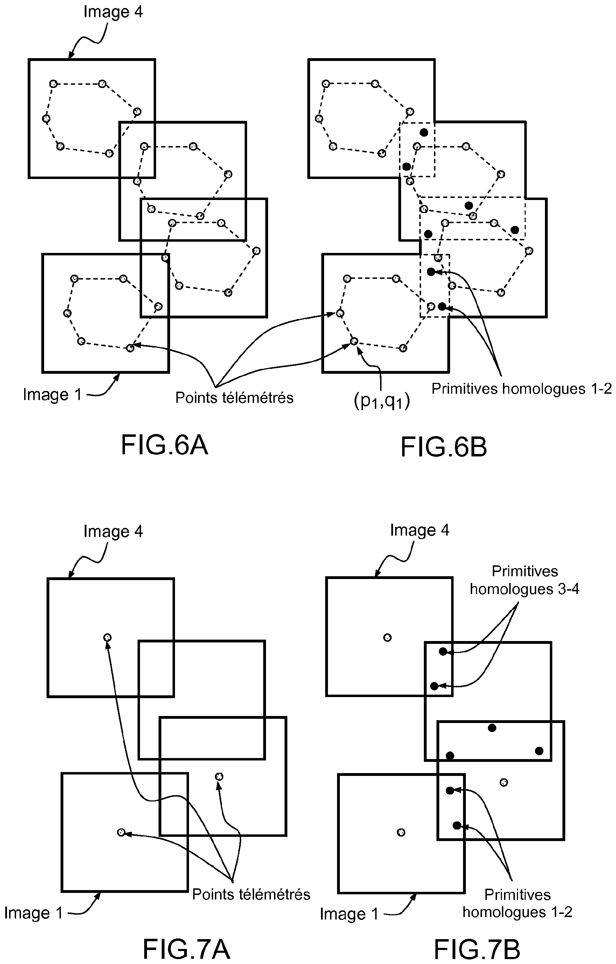

Selon un deuxième mode de réalisation du procédé, décrit en relation avec les figures 5 et 6, M images sont acquises successivement (avec M>1) et P points sont télémétrés dans K images, avec $1 \leq K \leq M$. Il s'agit en quelque sorte du mode de réalisation précédent étendu à M images.

On notera qu'il est possible de former une grande image à partir des M images mais cela n'est pas indispensable pour estimer les paramètres $x_e$, $y_e$, $z_e$, $\varphi_e$, $\theta_e$, $\psi_e$ de chaque image.

Dès lors qu'il y a plus d'une image, il est nécessaire que les images se recouvrent au moins deux à deux afin qu'elles puissent être mises en correspondance. Le recouvrement peut varier dans une large plage allant d'un minimum de l'ordre de 10% jusqu'à près de 100% (une valeur de 60% correspond aux conditions classiques d'aéro-triangulation pour les applications civiles où les acquisitions sont verticales). Deux images successives sont mises en correspondance en utilisant des primitives homologues (représentant les mêmes détails de la scène) appartenant aux recouvrements des images. Ces primitives peuvent être représentées par des points ou des segments ou plus généralement de formes décrivant de manière paramétrique les contours des formes correspondant à des éléments visibles de la scène. Ces descripteurs de forme sont obtenus par un traitement automatique susceptible d'extraire une information radiométrique caractéristique d'une forme géométrique ponctuelle, linéaire voir surfacique, telles qu'un croisement (ponctuel) une portion de route (linéaire) ou le contour d'un champ (surface). Ces primitives homologues sont indépendantes des points télémétrés.

Sur la figure 5, M=K=2, et P=10 avec 5 points télémétrés dans chacune des 2 images ; il y a 3 points homologues dans la zone de recouvrement des deux images.

Sur la figure 6A, M=K=4, et P=18 avec 6 points télémétrés dans chaque image. Nous avons représenté dans cette figure une même répartition (schématisée par les pointillés) au sein de chaque image, bien que cette répartition puisse varier dans chaque image.

La figure 6B illustre l'étape d'extraction de primitives homologues et de mise en correspondance des images, réalisées par l'unité de traitement 6. Dans la portion d'image commune aux images 1 et 2, dite zone de recouvrement des deux images, deux points homologues sont extraits ; 3 points homologues sont extraits dans la zone de recouvrement des images 2 et 3, et 2 points homologues sont extraits dans la zone de recouvrement des images 3 et 4.

Dans certains cas, ces M images successives sont acquises à partir d'un système optronique fixe c'est-à-dire dont la position $x_0$, $y_0$, $z_0$, n'évolue pas au cours des acquisitions. Ces images sont par exemple acquises par balayage du détecteur ou par rotation de la plate-forme. Dans cette configuration, la position géographique du capteur ne varie pas lors des différentes acquisitions ; sa position $x_e$, $y_e$, $z_e$ peut donc être estimée une seule fois. En revanche les attitudes changent d'une image à l'autre et les orientations $\varphi_e$, $\theta_e$, $\psi_e$ seront donc estimées M fois. Finalement lorsque le système est fixe, 3M+3 paramètres externes caractérisant les CDPV sont estimés.

L'approche par balayage du détecteur présente comme avantage de disposer d'une zone géo-référencée de la taille voulue, supérieure au seul champ instantané du détecteur, conditionnée par la durée d'acquisition et la vitesse de balayage. Cette capacité permet notamment de réaliser l'acquisition en privilégiant l'utilisation d'un petit champ (NFOV acronyme de l'expression anglo-saxonne Narrow Field Of View) plutôt qu'un grand (WFOV pour Wide FOV) afin de disposer d'une meilleure GRD sur l'information généralement située à grande distance. Elle peut être mise en oeuvre sans surcoût matériel, sur un système disposant déjà d'un télémètre et d'un moyen de balayage de la LdV. Ceci permet d'envisager la remise à niveau de capteurs existants.

Lorsqu'en outre plusieurs distances sont relevées sur chacune des images, on combine les avantages de l'approche par balayage tout en améliorant la performance du fait de la redondance des mesures de distance dans le processus d'estimation des paramètres de prise de vue ainsi que de la zone de couverture.

Dans d'autres cas, ces M images successives sont acquises à partir d'un système optronique embarqué sur une plate-forme mobile. Dans ce cas, sa position change au fil du temps. Il y aura donc en général M estimations de position $x_e$, $y_e$, $z_e$ et d'attitude $\varphi_e$, $\theta_e$, $\psi_e$ : M paramètres de positionnement et d'attitude seront acquis ($x_m$, $y_m$, $z_m$, $\varphi_m$, $\theta_m$, $\psi_m$) puis estimés ($x_e$, $y_e$, $z_e$, $\varphi_e$, $\theta_e$, $\psi_e$), soit 6M paramètres.

Dans ce cas également les images peuvent être acquises par balayage.

Lorsque la plate-forme décrit une trajectoire connue définie par un modèle paramétrique, le nombre de paramètres à estimer peut être réduit par une modélisation de la trajectoire incluant N paramètres.

Le modèle de trajectoire permet de contraindre l'évolution de la position du capteur (dans un domaine où l'évolution des paramètres est compatible des capacités cinématiques du système) et de disposer de valeurs de position en dehors des dates de mesure par filtrage ou interpolations des informations. Le modèle de trajectoire donne la position de la plate-forme avec, par exemple, l'expression polynomiale classique de la forme suivante dans laquelle $t_0$ est un temps d'origine ou de référence et $OM^{(n)}$ est la dérivée n-iéme de la position au temps $t_0$ :

$$\mathbf{OM} = \sum_{n=0}^{N} \frac{\left(t - t_0\right)^n}{n!} \left(\mathbf{OM}^{(n)}\right)_{t_0}$$

L'intervalle d'acquisition correspondant à un court laps de temps, un développement à l'ordre 2 sera généralement suffisant pour rendre compte d'une éventuelle manoeuvre de la plate-forme. Dans le cas contraire, si l'on doit utiliser un polynôme en puissance du temps de degré plus élevé, on préfère un développement de la trajectoire sous forme d'une courbe spline afin d'éviter d'éventuelles oscillations irréalistes pouvant apparaître avec la méthode polynomiale précédente. Pour illustrer la réduction de complexité qui résulte de la modélisation, il suffit d'indiquer qu'une modélisation limitée à l'accélération comprend 9 paramètres à estimer alors que le nombre des composantes de positions élaborées en 1 seconde à une cadence image de 50 Hz sont en nombre de 150 !

Dans l'approche polynomiale, les coefficients du développement peuvent être obtenus à partir d'une mesure des caractéristiques cinématiques à l'instant $t_0$. Alors que pour les deux approches les coefficients peuvent être estimés à partir de plusieurs mesures (position, vitesse) par un ajustement de type moindres-carrés. Cette procédure est élémentaire puisque le modèle est linéaire en fonction des valeurs des composantes sur les trois composantes de position, de vitesse et d'accélération.

Ainsi, l'établissement du modèle de trajectoire est soit basé sur un minimum de un jeu (date, position, vitesse) soit à partir de plusieurs jeux et d'une procédure d'estimation par moindres carrés. Le développement résultant permet de déterminer la position de la plate-forme (et donc indirectement du capteur) à la date des mesures du capteur afin de disposer d'informations synchrones. Si besoin, le même type d'opération peut être réalisé pour synchroniser les mesures images et télémétries.

L'estimation des paramètres de trajectoire peut être réalisée de manière :

- Indépendante de celle des paramètres de prises de vue et raffinée au cours du temps à la cadence d'arrivée de nouvelles positions. Dans ce cas on dispose d'un processus estimant la trajectoire avec 3N paramètres et d'un autre estimant 3M paramètres de CPDV. On utilise alors la date d'acquisition de chacune des images et calcule le positionnement du capteur correspondant en fonction du modèle paramétrique à ces dates d'acquisition.
- Dépendante de l'estimation des paramètres de prise de vue et dans ce cas le vecteur estimé contient à la fois les paramètres de trajectoire et de CPDV, soit 3N+3M paramètres à estimer.

De manière réaliste le nombre N de paramètre sera égal à 6 ou 9 selon la manoeuvre possible de la trajectoire sur la fenêtre de temps de recueil des mesures.

Selon un troisième mode de réalisation du procédé, décrit en relation avec les figures 7A et 7B et qui est un cas particulier du mode précédent, M images sont acquises et P points sont télémétrés dans K images avec K=P ; il y a donc un seul point télémétré dans chacune des K images (M=4, K=P=3 sur les figures). Le télémètre étant harmonisé avec la LdV du détecteur, ces points télémétrés sont respectivement au centre de chacune des K images. Comme on le voit sur la figure 7B, 2 points homologues sont extraits dans la zone de recouvrement entre les images 1 et 2, trois sont extraits dans la zone de recouvrement entre les images 2 et 3, et deux sont extraits dans la zone de recouvrement entre les images 3 et 4. Cette approche ne nécessite pas d'évolution matérielle des équipements existants ou envisagés aujourd'hui.

On note par ailleurs qu'on peut avoir P>K. Certaines images peuvent ne pas avoir de point télémétré, dés lors qu'elles présentent des primitives homologues avec d'autres images ayant elles-mêmes des points télémétrés.

Le procédé selon l'invention est déclenché pour acquérir l'environnement d'une position géographique particulière. D'après la position mesurée du capteur, on déduit une orientation approchée pour le recueil. Le calcul des directions angulaires à appliquer sur la LdV est alors réalisé pour rendre compte :

- De la surface au sol désirée,
- des caractéristiques du détecteur (champ ou "FOV"),
- de la consigne de recouvrement établie entre image (de 20 à 100%).

Comme les mesures d'orientation disposent d'une meilleure précision court terme (entre images rapprochées), et que le nombre d'images à réaliser en azimut est généralement supérieur à celui en site pour acquérir une zone aux dimensions similaires, on choisira de préférence un recouvrement supérieur en site qu'en azimut et on réalisera un balayage d'abord en azimut puis en site. L'écart angulaire de déplacement de la ligne de visée sera alors plus important entre 2 valeurs en site qu'entre 2 valeurs en azimut.

Le procédé selon l'invention permet de mieux déterminer les paramètres qui affectent de manière substantielle la performance de géo-référencement pour des prises de vue à forte oblicité et en particulier lors d'opérations aéroterrestres comprenant :

- les missions aéroportées tactiques qui nécessitent de rester à distance de la zone d'intérêt pour des raisons de sécurité,
- les missions de surveillance depuis des systèmes terrestres ou évoluant à faible altitude.

**Revendications**

1. Procédé de géo-référencement d'une zone au moyen d'un système optronique d'imagerie comportant un détecteur (1) ayant une ligne de visée, des moyens de positionnement (3) de ce détecteur, des moyens (4) de mesure d'attitude du détecteur, un télémètre (2), des moyens (5) d'acquisition des coordonnées images des points télémétrés, et une unité de traitement (6) reliée aux éléments précités, qui comprend une étape d'acquisition de M images successives au moyen du détecteur, la zone imagée étant répartie entre ces M images, une étape d'acquisition par les moyens de positionnement (3) du positionnement $x_m$, $y_m$, $z_m$, du détecteur aux dates d'acquisition des M images, une étape de mesure par les moyens (4) de mesure d'attitude du détecteur de l'attitude $\varphi_m$, $\theta_m$, $\psi_m$, du détecteur aux dates d'acquisition des M images, **caractérisé en ce que** le télémètre est harmonisé avec la ligne de visée du détecteur, **en ce que** les M images de la zone sont acquises successivement et présentent des zones de recouvrement deux à deux et **en ce qu'**il comprend en outre les étapes :

   o) d'extraction de primitives homologues dans les zones de recouvrement de ces M images et une étape de mise en correspondance des images deux à deux à partir de ces primitives homologues,

   i) de mesure par le télémètre (2) de P distances $d_1$, $d_2$, ... , $d_p$ entre le système et P points de la zone dits points télémétrés, avec P≥3 et M>P, ces points télémétrés étant répartis dans K desdites images mises en correspondance deux à deux avec $1 \leq K \leq M$, avec P=K c'est-à-dire avec un seul point télémétré dans chacune des K images,

   ii) d'acquisition par les moyens (5) d'acquisition des coordonnées images des points télémétrés, des coordonnées dans ces K images mises en correspondance deux à deux des points dits points images $(p_1, q_1)$, $(p_2, q_2)$, ..., $(p_p, q_p)$ correspondant aux P points télémétrés,

   iii) et une étape d'estimation par l'unité de traitement (6) des paramètres de conditions de prise de vue $x_e$, $y_e$, $z_e$, $\varphi_e$, $\theta_e$, $\psi_e$ du détecteur correspondant aux M images en fonction de positionnements, d'attitudes, des distances et des coordonnées des points images, en vue de diminuer les erreurs sur les paramètres $x_m$, $y_m$, $z_m$, $\varphi_m$, $\theta_m$, $\psi_m$ du détecteur pour chacune des M images.

2. Procédé de géo-référencement d'une zone selon la revendication précédente, **caractérisé en ce que** les points télémétrés sont respectivement au centre de chacune des images.

3. Procédé de géo-référencement d'une zone selon la revendication précédente, **caractérisé en ce que** le système optronique étant fixe, les paramètres $x_e$, $y_e$, $z_e$ ne sont estimés qu'une fois.

4. Procédé de géo-référencement d'une zone selon la revendication 2, **caractérisé en ce que** le système optronique comportant des moyens de mesures cinématiques de la trajectoire du système de positionnement (3), vitesse, accélération, et étant mobile selon cette trajectoire modélisée sous forme paramétrique, les positionnements $x_e$, $y_e$, $z_e$ sont estimés pour les positions aux dates correspondant à celle des acquisitions images, télémétrie.

5. Procédé de géoréférencement d'une zone selon l'une des revendications précédentes, **caractérisé en ce qu'**en utilisant des données géoréférencées de référence, il comporte une étape d'appariement automatique des points télémétrés de l'image active avec ces données de référence.

6. Système optronique de géo-référencement (100) qui comprend un détecteur (1) ayant une ligne de visée, des moyens de positionnement (3) de ce détecteur, des moyens (4) de mesure d'attitude du détecteur, un télémètre (2), des moyens (5) d'acquisition des coordonnées images des points télémétrés, et une unité de traitement (6) reliée aux éléments précités, **caractérisé en ce que** le télémètre est harmonisé avec la ligne de visée du détecteur et **en ce que** l'unité de traitement comporte des moyens de mise en oeuvre du procédé selon l'une des revendications précédentes.

**Patentansprüche**

1. Verfahren zum Georeferenzieren einer Zone mittels eines optronischen Bildgebungssystems umfassend einen Detektor (1) mit einer Sichtlinie, Mittel (3) zum Positionieren dieses Detektors, Mittel (4) zum Messen der Lage des Detektors, ein Telemeter (2), Mittel (5) zum Erfassen der Bildkoordinaten der telemetrierten Punkte und eine mit den vorerwähnten Elementen verbundene Verarbeitungseinheit (6), umfassend eine Stufe des Erfassens von M aufeinander folgenden Bildern mittels des Detektors, wobei die abgebildete Zone zwischen diesen M Bildern verteilt ist, eine Stufe des Erfassens, durch die Positionierungsmittel (3), der Positionierung $x_m$, $y_m$, $z_m$ des Detektors zu den Zeiten der Erfassens der M Bilder, eine Stufe des Messens, durch die Mittel (4) zum Messen der Lage des Detektors, der Lage $\varphi_m$, $\theta_m$, $\psi_m$ des Detektors zu den Zeiten des Erfassens der M Bilder, **dadurch gekennzeichnet, dass** das Telemeter mit der Sichtlinie des Detektors harmonisiert wird, dadurch, dass die M Bilder der Zone aufeinander folgend erfasst werden und paarweise Abdeckungszonen präsentieren, und dadurch, dass es ferner die folgenden Schritte beinhaltet:

   o) Extrahieren von homologen Primitiven in den Abdeckungszonen dieser M Bilder und einen Schritt des paarweisen Inkorrespondenzbringens der Bilder auf der Basis dieser homologen Primitive,

   i) Messen, mit dem Telemeter (2), von P Distanzen $d_1$, $d_2$, ..., $d_p$ zwischen dem System und P Punkten der Zone, telemetrierte Punkte genannt, wobei P≥3 und M>P ist, wobei diese telemetrierten Punkte in K der Bilder verteilt sind, die paarweise in Korrespondenz gebracht wurden, wobei $1 \leq K \leq M$ ist, wobei P=K ist, d.h. mit einem einzigen telemetrierten Punkt in jedem der K Bilder,
   ii) Erfassen, durch die Mittel (5) zum Erfassen der Bildkoordinaten der telemetrierten Punkte, der Koordinaten in diesen K Bildern, die paarweise in Korrespondenz gebracht wurden, der Bildpunkte genannten Punkte $(p_1, q_1)$, $(p_2, q_2)$, ..., $(p_p, q_p)$, die den P telemetrierten Punkten entsprechen,
   iii) und einen Schätzschritt, durch die Verarbeitungseinheit (6), der Aufnahmebedingungsparameter $x_e$, $y_e$, $z_e$, $\varphi_e$, $\theta_e$, $\psi_e$ des Detektors, die den M Bildern in Abhängigkeit von Positionierungen, Lagen, der Distanzen und der Koordinaten der Bildpunkte entsprechen, um die Fehler an den Parametern $x_m$, $y_m$, $z_m$, $\varphi_m$, $\theta_m$, $\psi_m$ des Detektors für jedes der M Bilder zu verringern.

2. Verfahren zum Georeferenzieren einer Zone nach dem vorherigen Anspruch, **dadurch gekennzeichnet, dass** die telemetrierten Punkte jeweils in der Mitte jedes der Bilder liegen.

3. Verfahren zum Georeferenzieren einer Zone nach dem vorherigen Anspruch, **dadurch gekennzeichnet, dass**, da das optronische System fest ist, die Parameter $x_e$, $y_e$, $z_e$ nur einmal geschätzt werden.

4. Verfahren zum Georeferenzieren einer Zone nach Anspruch 2, **dadurch gekennzeichnet, dass**, da das optronische System kinematische Mittel zum Messen der Trajektorie des Positionierungssystems (3), der Geschwindigkeit, der Beschleunigung umfasst und gemäß dieser modellierten Trajektorie in parametrischer Form mobil ist, die Positionierungen $x_e$, $y_e$, $z_e$ für die Positionen zu den Zeiten entsprechend derjenigen der Bild- und Telemetrieerfassungen geschätzt werden.

5. Verfahren zum Georeferenzieren einer Zone nach einem der vorherigen Ansprüche, **dadurch gekennzeichnet, dass** es, unter Nutzung der georeferenzierten Referenzdaten, einen Schritt des automatischen Anpassens der telemetrierten Punkte des aktiven Bildes mit diesen Referenzdaten beinhaltet.

6. Optronisches Georeferenzierungssystem (100), das einen Detektor (1) mit einer Sichtlinie, Mittel (3) zum Positionieren dieses Detektors, Mittel (4) zum Messen der Lage des Detektors, ein Telemeter (2), Mittel (5) zum Erfassen der Bildkoordinaten der telemetrierten Punkte und eine mit den vorerwähnten Elementen verbundene Verarbeitungseinheit (6) umfasst, **dadurch gekennzeichnet, dass** das Telemeter mit der Sichtlinie des Detektors harmonisiert ist, und dadurch, dass die Verarbeitungseinheit Mittel zum Ausführen des Verfahrens nach einem der vorherigen Ansprüche umfasst.

**Claims**

1. A method for geo-referencing an area by means of an imaging optronics system comprising a detector (1) having an optical axis, means (3) for positioning this detector, means (4) for measuring the attitude of the detector, a range finder (2), means (5) of acquiring the image coordinates of the range-found points, and a processing unit (6) linked to the aforementioned elements, which comprises a step of acquiring M successive images by means of the detector, the imaged area being distributed between these M images, a step of acquiring the positioning $x_m$, $y_m$, $z_m$ of the detector at the times of acquisition of the M images with the positioning means (3), a step of measuring the attitude $\varphi_m$, $\theta_m$, $\psi_m$ of the detector at the times of acquisition of the M images with the measuring means (4) for measuring the attitude of the detector, **characterized in that** the range finder is coordinated with the optical axis of the detector, **in that** the M images of the area are acquired in succession and present areas of overlap two by two, and **in that** it further comprises the steps:

    o) of extracting homologous primitives in the areas of overlap of these M images and a step of mapping the images two by two on the basis of these homologous primitives,

        i) of measuring, with the range finder (2), P distances $d_1$, $d_2$, ..., $d_P$ between the system and P points of the area, called range-found points, with $P \geq 3$ and M>P, these range-found points being distributed in K of said images mapped two by two with $1 \leq K \leq M$, with P=K, that is to say with a single range-found point in each of the K images,

        ii) of acquiring, with the means (5) of acquiring the image coordinates of the range-found points, the coordinates in these K images mapped two by two of the points called image points $(p_1, q_1)$, $(p_2, q_2)$, ..., $(p_P, q_P)$ corresponding to the P range-found points,

        iii) and a step of estimating, with the processing unit (6), the parameters of exposure conditions $x_e$, $y_e$, $z_e$, $\varphi_e$, $\theta_e$, $\psi_e$ of the detector corresponding to the M images as a function of positionings, of attitudes, of distances and of coordinates of the image points, in order to reduce the errors on the parameters $x_m$, $y_m$, $z_m$, $\varphi_m$, $\theta_m$, $\psi_m$ of the detector for each of the M images.

2. A method for geo-referencing an area according to the preceding claim, **characterized in that** the range-found points are respectively at the center of each of the images.

3. The method for geo-referencing an area according to the preceding claim, **characterized in that**, since the optronics system is fixed, the parameters $x_e$, $y_e$, $z_e$ are estimated only once.

4. The method for geo-referencing an area according to Claim 2, **characterized in that**, since the optronics system comprises kinematic means for measuring the trajectory of the positioning system (3), speed, acceleration, and is mobile on this trajectory modeled in parametric form, the positionings $x_e$, $y_e$, $z_e$ are estimated for the positions at the times corresponding to that of the image acquisitions, range-finding.

5. The method for geo-referencing an area according to any of the preceding claims, **characterized in that**, by using reference geo-referenced data, it includes a step of automatically pairing the range-found points of the active image with these reference data.

6. A geo-referencing optronics system (100) which comprises a detector (1) having an optical axis, means (3) for positioning this detector, means (4) for measuring the attitude of the detector, a range finder (2), means (5) of acquiring the image coordinates of the range-found points, and a processing unit (6) linked to the aforementioned elements, **characterized in that** the range finder is coordinated with the optical axis of the detector and **in that** the processing unit comprises means for implementing the method according to any of the preceding claims.

FIG.1A

FIG.1B

FIG.3

FIG.2

laser

Dispositif déflection / réfraction

FIG.4

Sommet de prise de vue
de l'image n

Coordonnées télémétrées
dans l'image n

Sommet de prise de vue
de l'image n+1

Surface terrestre imagée

Mesure distances

Primitives homologues
entre les 2 images

Zone imagée
commune

FIG.5

Image 4

Image 1

Points télémétrés

**FIG.6A**

Primitives homologues 1-2

$(p_1, q_1)$

**FIG.6B**

Image 4

Image 1

Points télémétrés

**FIG.7A**

Image 4

Primitives homologues 3-4

Image 1

Primitives homologues 1-2

**FIG.7B**

**3** Moyens de positionnement

**1**

**4** Moyens de mesure d'attitude

$x_m, y_m, z_m$

**100**

$\varphi_m, \theta_m, \psi_m$

**5** Mesure coordonnées images

**6**

**2**

$p, q$

$d$

Estimations

$x_e, y_e, z_e, \varphi_e, \theta_e, \psi_e$

# FIG.8

Zone de triangulation 1

$h_{21}$    $h_{22}$

Cellule MNT

$h_{11}$    $h_{12}$

Zone de triangulation 2

FIG.9A

$(x_0, y_0, z_0)$

$d_3$

$d_1$

$d_2$

$h_3$

$h_1$    $h_2$

$(x_0, y_0, z_0)$

$d_3$

$d_5$

$d_1$    $d_4$    $d_2$

$h_3$

$h_5$

$h_1$    $h_2$

$h_4$

FIG.9B

EP 2 513 668 B1

$(x_0, y_0, z_0)$

Facette
iso-altitude

Résultat de visibilité sur profil non densifié : | Visibilité (V) | Masquage (M) | Visibilité (V)

$(x_0, y_0, z_0)$

Facettes
densifiées

Résultat de visibilité sur profil densifié : | V | M | V | Masquage | Visibilité

FIG.10

29

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002060784 A
- US 2006215935 A
- US 2009034795 A